# EUROPÄISCHE PATENTSCHRIFT

(11) **EP 3 844 468 B1**
(45) Veröffentlichungstag und Bekanntmachung des Hinweises auf die Patenterteilung: **01.03.2023**
(21) Anmeldenummer: 19766162.2
(22) Anmeldetag: 30.08.2019
(51) Int. Cl.: G01L 5/00, A63B 71/14, G01P 15/18

(54) **VORRICHTUNG ZUR ERFASSUNG DER SCHLAGQUALITÄT BEI KONTAKTSPORTARTEN**
DEVICE FOR DETECTING THE PUNCH QUALITY IN CONTACT SPORTS
DISPOSITIF DE DÉTECTION DE LA QUALITÉ DE FRAPPE LORS DE SPORTS DE CONTACT

(30) Priorität: 30.08.2018 AT 2662018
(43) Veröffentlichungstag der Anmeldung: 07.07.2021
(73) Patentinhaber: Blue Danube Robotics GmbH, 1220 Wien (AT)
(72) Erfinder: ZILLICH, Michael, 1080 Wien (AT); HÖLBLING, Dominik, 1150 Wien (AT); FERNER, Tobias, 1120 Wien (AT); BALDINGER, Andreas, 1040 Wien (AT); WOHLKINGER, Walter, 1020 Wien (AT)
(74) Vertreter: Keschmann, Marc
(86) Internationale Anmeldenummer: PCT/AT2019/000026
(87) Internationale Veröffentlichungsnummer: WO 2020/041806

(56) Entgegenhaltungen:
- WO-A2-03/063119
- US-A1- 2003 163 287
- US-A1- 2011 159 939
- US-A1- 2014 248 594
- US-B1- 8 221 291

## Beschreibung

Die Erfindung betrifft eine Vorrichtung zur Erfassung der Schlagqualität bei Kontaktsportarten sowie ein Verfahren zur Herstellung einer solchen Vorrichtung.

Eine objektive Beurteilung der Schlagqualität ist in diversen Kontaktsportarten sowohl zur Beurteilung des Trainingserfolges als auch zur Vergabe von Punkten in Wettkämpfen wünschenswert. Darüber hinaus ist eine Anwendung im wissenschaftlichen Kontext zur Durchführung von biomechanischen oder trainingswissenschaftlichen Studien vorteilhaft.

Kontaktsportarten umfassen hierbei Sportarten, deren Regeln gegenseitigen Körperkontakt unter den beteiligten Wettkämpfern oder Mannschaften fordern oder erlauben. Die Erfindung bezieht sich insbesondere, aber nicht ausschließlich, auf Kontaktsportarten, deren Regeln das Setzen von Schlägen mit einem Körperteil des Sportlers, z.B. mit den Armen, Händen, Beinen oder Füßen, vorsehen. Insbesondere umfasst dies Kampfsportarten, wie z.B. Boxen, bei denen die Schläge ein Ziel, wie z.B. einen gegnerischen Kämpfer oder einen Trainingsgegenstand, möglichst kraftvoll bzw. schlagkräftig treffen sollen.

Die Qualität eines Schlages beinhaltet hierbei sowohl die auf das Ziel einwirkende Kraft bzw. den Kraftstoß als auch die Schlaggeschwindigkeit bzw. die Beschleunigung oder Abbremsung und die Schlagrichtung (als Indikator für die Schlagtechnik), um eine Impulsübertragung einschätzen zu können.

Die WO 03/063119 A2 beschreibt sehr allgemein ein System, bestehend aus einem Sportgerät, wie z.B. einem Boxhandschuh, mit eingebettetem Kraftsensor, einer drahtlosen Übertragungseinheit, einem Empfänger und Anzeigegeräten. Der eigentliche Kraftsensor kann als piezokapazitiver Sensor ausgebildet sein, oder auch als gas-, flüssigkeits- oder gelgefüllter Drucksensor. Die genaue Funktionsweise des Kraftsensors ist hierbei nicht weiter ausgeführt. Die Schlaggeschwindigkeit findet hierbei keinen Eingang, was zu Messfehlern führt und eine Beurteilung der Effektivität eines Schlages mindert.

Die US 2014/0248594 A1 beschreibt ein System bestehend aus einem Boxhandschuh und einem eingebetteten Beschleunigungssensor, das primär dazu dient, um die Positionsänderung der Hände der Sportlerin/des Sportlers zu bestimmen, um die korrekte Deckungshaltung beurteilen zu können. Signale des Beschleunigungssensors werden drahtlos an einen Empfänger übermittelt. Weiters wird erwähnt, dass entweder der Handschuh oder eine extern montierte Trefferfläche einen Kraftsensor enthalten können, wobei wiederum die genaue Funktionsweise dieses Kraftsensors nicht angegeben wird.

Aus der DE 44 26 302 A1 ist eine Lösung bekannt, bestehend aus einer Trefferfläche, einer nachgiebigen Abstützeinrichtung der Trefferfläche und einem mit der Trefferfläche verbundenen Beschleunigungssensor. Über die aus einer Kalibrierung zu ermittelnden Nachgiebigkeiten und Massenträgheitsmomente des gesamten Aufbaus können hiermit ein wegabhängiger statischer Kraft-Zeit-Verlauf und ein beschleunigungsabhängiger dynamischer Kraft-Zeit-Verlauf gemessen werden. Vorgeschlagen werden etwa eine Anwendung auf Schlagpolster, Kampfwesten oder eine an der Wand befestigte Vorrichtung. Da diese Kalibrierungen in der Praxis, vor allem für in der Hand gehaltene Schlagpolster oder getragene Kampfwesten, kaum möglich sind, ist dieses System effektiv nur auf fix montierte Vorrichtungen beschränkt.

Die WO 2000/048692 A1 beschreibt eine Lösung zur Detektion von Treffern bei Kampfsportarten wie Taekwondo. Das System besteht aus einer elastischen, dämpfenden Schicht, vorzugsweise Polyurethan und darin eingebetteten luftdichten schlauchförmigen Hohlräumen. Diese Schläuche sind über einen gemeinsamen Sammelraum mit einer Druckmesseinrichtung verbunden. Diese Schicht wird als eine Art Weste von der Sportlerin/dem Sportler getragen. Bei Einwirken eines Schlages werden einige dieser Schläuche komprimiert, wodurch der Luftdruck in ihnen steigt. Diese Druckschwankung wird über die Sammelräume an die Druckmesseinrichtung weitergeleitet. Drosselartige Verengungen der Schläuche im Übergangsbereich zu den Sammelräumen sorgen dafür, dass der Druck nicht zu schnell in die jeweils nicht komprimierten Schläuche entweicht. Die elastische Polyurethan-Schicht sorgt schließlich für eine Rückstellung nach Ende des Schlages. Die Erfinder erwähnen einen Einsatz auch in anderen Geräten, wie Schlagpolstern, Boxhandschuhen, Kopfschützern und ähnlichem. Der großflächig und komplex ausgeformte luftdichte Raum, die eingebauten Drosseln sowie die Notwendigkeit der Druckweiterleitung über eine Kanalstruktur führen jedoch zu Verfälschungen in der Übertragung der Druckwellen zur Druckmesseinrichtung und daher zu Druckverläufen, die nicht repräsentativ für den jeweiligen Schlag sind. Weiterer Stand der Technik ist aus US 2011/159939 A1, US 2003/163287 A1, US 8 221 291 B1 und WO 03/063119 A2 bekannt.

Die genaue Beurteilung der Qualität eines Schlages ist sehr schwierig, da die Qualität eines Schlages von vielen physikalischen und auch anatomischen Faktoren abhängt, wie den Massen des "Projektils" (Faust und Arm bzw. Bein und Fuß) und des getroffenen Körpers, den

Dämpfungseigenschaften der jeweiligen Oberflächen, den Eigenschaften des getroffenen Gewebes etc. Im Allgemeinen jedoch zählen für die Wucht eines Schlages sowohl die Kraft als auch die Geschwindigkeit und die Kontaktdauer, mit der das Ziel getroffen wird.

Die vorliegende Erfindung zielt daher darauf ab, eine Vorrichtung zur Erfassung der Schlagqualität bei Kontaktsportarten zu schaffen, welche mit kleinbauenden Mitteln eine möglichst umfassende Beurteilung eines Schlages erlaubt. Die Vorrichtung soll vorzugsweise an der Trefferfläche des den Schlag ausführenden Körperteils anbringbar sein, um möglichst direkte, unverfälschte Messergebnisse zu erzielen. Weiters soll eine solche Vorrichtung mobil sein, sodass sie von der Sportlerin/dem Sportler getragen werden kann ohne die Sportlerin/den Sportler zu beeinträchtigen. Weiters soll die Vorrichtung robust sein, um wiederholte Schläge unbeschadet und ohne Verlust der Messgenauigkeit zu überstehen.

Zur Lösung dieser Aufgabe sieht die Erfindung eine Vorrichtung zur Erfassung der Schlagqualität bei Kontaktsportarten vor, die die die Merkmale des Anspruchs 1 aufweist.

Die Erfindung beruht hierbei auf der Erkenntnis, dass die Kombination einer Kraft- und einer Beschleunigungsmessung eine verbesserte Beschreibung der Schlagqualität erlaubt. Zum Beispiel zeigt sich, dass die Schläge olympischer Leicht- und Schwergewichtsboxer zwar ähnliche Aufprall-Geschwindigkeiten und Beschleunigungen aufweisen, die Schläge der Schwergewichtsboxer jedoch deutlich höhere Kräfte aufweisen. Daraus kann man schließen, dass eine Betrachtung der Beschleunigungen alleine nicht ausreichend ist.

Weiters zeigen Schläge, die zwar eine geringere Aufprall-Beschleunigung, aber eine längere Aufpralldauer aufweisen, ähnliche Wirkung auf den Getroffenen wie Schläge mit höherer Aufprall-Beschleunigung und kürzerer Aufpralldauer. Auch hierfür reichen Beschleunigungssensoren alleine nicht aus, da diese die Aufpralldauer, d.h. die Zeit der tatsächlichen Kraftübertragung, nicht messen können.

Weiters zeigte sich, dass die Stellung der Faust, und somit die Art der Ausführung des Schlages, einen Einfluss auf die Schlagqualität hat. Hier können Beschleunigungssensoren während der Schlagausführung die Position und die Geschwindigkeit der Faust (über Integration der Beschleunigungswerte) liefern, und zusammen mit der gemessenen Schlagqualität wertvolles Feedback für das Training geben.

Zur Messung der Beschleunigung können herkömmliche Bauarten von Beschleunigungssensoren zur Anwendung gelangen. Beschleunigungssensoren beruhen in der Regel auf dem Prinzip, dass die auf eine Testmasse wirkende Trägheitskraft bestimmt wird. Dadurch kann bestimmt werden, ob eine Geschwindigkeitszunahme oder -abnahme stattfindet. Bevorzugt kommen miniaturisierte Beschleunigungssensoren in der Form von mikro-elektro-mechanischen Systemen (MEMS) zum Einsatz.

Zur Messung der bei der Ausführung des Schlages wirkenden Kraft ist erfindungsgemäß ein Kraftsensor vorgesehen, der sich durch eine überaus einfache und robuste Bauart auszeichnet und dessen Messprinzip eine unverfälschte und direkte Kraftermittlung sicherstellt. Der Kraftsensor umfasst dabei einen fluidgefüllten, elastisch verformbaren Sensorkörper, in dem ein den Fluiddruck messender Drucksensor angeordnet ist. Das Fluid ist in einem geschlossenen Hohlraum bzw. einer geschlossenen Kammer des Sensorkörpers angeordnet, sodass eine äußere Krafteinwirkung auf den Sensorkörper zu einer Verformung bzw. Komprimierung desselben führt. Die Komprimierung ruft eine Erhöhung des Fluiddrucks im Inneren der geschlossenen Kammer hervor, die in einem vorbestimmten Verhältnis zur einwirkenden Kraft steht, sodass die vom Drucksensor ermittelten Werte einen direkten Rückschluss auf die Kraft erlauben.

Um eine unverfälschte Messung zu erhalten, ist es wesentlich, dass der Drucksensor in dem verformbaren, fluidgefüllten Sensorkörper angeordnet ist. Der Drucksensor ist somit nicht in einer mit dem verformbaren Sensorkörper z.B. über einen Kanal verbundenen, Kammer angeordnet, die dem zu erfassenden Schlag nicht ausgesetzt ist.

Bevorzugt umfasst der Sensorkörper eine gasgefüllte Kammer, die von einer flexiblen, durch Schlageinwirkung verformbaren Hülle umgeben ist und eine elastische Stützstruktur enthält, wobei die Stützstruktur ein Dämpfungselement ausbildet, welches die bei einer Schlageinwirkung auftretenden Kräfte mechanisch dämpft. Die elastische Stützstruktur umfasst bevorzugt eine offene Porosität, damit das Fluid sich ungehindert verteilen kann. Die Stützstruktur ist für die Rückstellung des Sensorkörpers nach der durch einen Schlag hervorgerufenen Verformung verantwortlich und kann beispielsweise von einem Schaumstoff oder einer beliebigen dreidimensionalen, netzartigen Struktur gebildet sein.

Vorzugsweise ist vorgesehen, dass die elastische Stützstruktur den Drucksensor zumindest teilweise umgibt. Der Drucksensor ist somit in die Stützstruktur eingebettet.

Gemäß der beanspruchten Erfindung sind die Messwerte des Kraftsensors und des Beschleunigungssensors einer Erfassungseinheit zugeführt, die zur Aufzeichnung einer Zeitreihe der Messwerte des Kraftsensors und des Beschleunigungssensors ausgebildet ist. Die Erfassungseinheit kann beispielsweise als Mikrokontroller ausgebildet sein.

Trifft nun die Sportlerin/der Sportler mit dem Trainingsgerät, an oder in welchem die erfindungsgemäße Vorrichtung ausgebildet oder angebracht ist, ein Ziel oder wird das Trainingsgerät getroffen, wird der Sensorkörper komprimiert und der im Sensorkörper angeordnete Drucksensor misst den daraus resultierenden Anstieg des Innendrucks. Gleichzeitig misst der Beschleunigungssensor die aus dem Stoß folgende starke Abbremsung. Die Zeitreihen dieser beiden Messwerte werden vom Mikrokontroller gesammelt und vorverarbeitet und können vorzugsweise über eine angeschlossene Übertragungseinheit an eine Auswerteeinheit übermittelt werden, wo diese Werte anhand genormter Druck/Beschleunigungs-Kraftverläufe interpretiert und dann der Sportlerin/dem Sportler angezeigt werden. Die Übermittlung der Messwerte bzw. Messwertreihen an die Auswerteeinheit erfolgt bevorzugt drahtlos, insbesondere über Kurzreichweitenfunk, wie z.B. über Bluetooth.

Weiters können die Zeitreihen des Beschleunigungssensors während der Schlagbewegung aufgezeichnet und an die Auswerteeinheit übertragen werden, um Parameter der Schlagtechnik zu ermitteln und der Sportlerin/dem Sportler Rückmeldung über die korrekte Durchführung des Schlages zu geben. Auch kann aus dem Beschleunigungsverlauf des Schlages unter Einbeziehung des Körpergewichts der Sportlerin/des Sportlers eine theoretische Schlagkraft vorhergesagt werden und als Referenz für die gemessene Schlagkraft dienen, um etwaige Fehlmessungen detektieren zu können.

Die somit ermittelten Daten erlauben der Sportlerin/dem Sportler ihr/sein Training zu verbessern. Weiters kann die Sportlerin/der Sportler ihre/seine ermittelten Trainingsdaten über entsprechende online-Dienste mit denen anderer Sportlerinnen/Sportler vergleichen. Weiters kann das System in Verbindung mit einer Virtual Reality Brille zum Spielen genutzt werden. Dabei können zwei oder mehrere Sportlerinnen/Sportler mithilfe eines Boxsacks o.ä. gegeneinander kämpfen indem die Kraftdaten beider Teilnehmerinnen/Teilnehmer miteinander verglichen werden. Umrechnungsfaktoren können dabei eine Vergleichbarkeit zwischen Menschen mit unterschiedlichen Voraussetzungen (Gewicht, Größe, Alter etc.) schaffen.

Was die konstruktive Ausführung der erfindungsgemäßen Vorrichtung betrifft, kann bevorzug vorgesehen sein, dass nicht nur der Drucksensor, sondern auch der Beschleunigungssensor im Inneren des Sensorkörpers angeordnet ist. Dies führt zu einer besonders kompakten Ausführung, bei welcher der Beschleunigungssensor gleichzeitig in einer geschützten Umgebung liegt. Alternativ kann der Beschleunigungssensor auch außerhalb des Sensorkörpers angeordnet sein.

In beiden Fällen können der Drucksensor und der Beschleunigungssensor bevorzugt auf einem gemeinsamen Träger angeordnet sein, insbesondere auf einer gemeinsamen Platine.

Wie bereits erwähnt ist bevorzugt vorgesehen, dass der Kraftsensor und der Beschleunigungssensor in ein Trainingsgerät integriert, insbesondere eingebettet sind. Insbesondere sind der Kraftsensor und der Beschleunigungssensor in einen Boxhandschuh, einen Schlagpolster, eine Schutzweste oder einen Fußschützer als Trainingsgerät eingebettet, insbesondere eingenäht.

Bevorzugt sind der Kraftsensor und ggf. der Beschleunigungssensor von einer Dämpfungsschicht, insbesondere einer Schicht eines Kunststoffschaums, umgeben. Insbesondere ist die Dämpfungsschicht auf der schlagzugewandten und auf der schlagabgewandten Seite der Sensoren mit der gleichen Schichtstärke ausgebildet, damit die Messergebnisse unabhängig von der Schlagseite vergleichbar bleiben.

Das Material der Dämpfungsschicht dämpft hierbei die Wirkung eines Schlages, und zwar umso mehr, je dicker die Dämpfungsschicht ist. Dabei ist es für genaue und wiederholbare Messergebnisse vorteilhaft, wenn der Sensorkörper im Bereich der Trefferfläche von einer konstant dicken Schicht der Dämpfungsschicht umgeben ist. Eine bevorzugte Ausführung der Erfindung sieht in diesem Zusammenhang vor, dass der Sensorkörper des Kraftsensors im Schlagbereich des Trainingsgeräts, insbesondere Boxhandschuhs, derart in das Trainingsgerät eingebettet ist, dass der Sensorkörper auf einer schlagzugewandten und ggf. auf einer schlagabgewandten Seite von einer Dämpfungsschicht konstanter Dicke bedeckt ist. Somit werden unabhängig von der genauen Position des Treffers auf der Trefferfläche bzw. im Schlagbereich bei gegebener Schlagkraft dieselben Ergebnisse gemessen.

Weiters ist es vorteilhaft, wenn der Sensorkörper überall an der Dämpfungsschicht anliegt, sodass er nicht verrutschen kann und sich keine unerwünschten Hohlräume zwischen dem Sensorkörper und der Dämpfungsschicht bilden können. Eine bevorzugte Weiterbildung sieht hierbei vor, dass der Sensorkörper mit der Dämpfungsschicht stoffschlüssig verbunden ist.

Je nach Art des Trainingsgerätes kann es mehrere vorgesehene Trefferflächen geben. Beispielsweise können mit einem Boxhandschuh Faustschläge oder Handrückenschläge ausgeführt werden. Hierbei kann es je nach Ausformung des Trainingsgerätes vorkommen, dass sich für verschiedene Trefferflächen unterschiedlich dicke Dämpfungsschichten des Dämpfungsmaterials über dem Sensorkörper ergeben. Wie schon ausgeführt, ergeben sich damit durch die unterschiedliche

Dämpfungswirkung im Bereich der verschiedenen Trefferflächen unterschiedliche Messergebnisse des Kraftsensors bei gegebener Schlagkraft. Um nun diese unterschiedlichen Schlagarten (z.B. Faustschlag versus Handrückenschlag) und damit unterschiedliche Trefferflächen voneinander unterscheiden zu können, wird erfindungsgemäß aus den Daten des Beschleunigungssensors die Bahn der Schlagbewegung errechnet und anhand der Bahn wird auf die Schlagart geschlossen.

Für jede Schlagart und damit assoziierte Trefferfläche wird nun eine entsprechende Kalibrierung durchgeführt, um zu jedem gemessenen Druckwert die für die jeweilige Trefferfläche entsprechende korrekte Kraft zu errechnen. Somit können mit nur einem Sensorkörper mehrere Trefferflächen abgedeckt werden.

Die Erfindung betrifft weiters ein Verfahren zur Herstellung einer erfindungsgemäßen Vorrichtung, umfassend das Herstellen einer Dämpfungsschicht eines Trainingsgeräts aus einem geschäumten Material, insbesondere Kunststoffschaum, und das Einbetten eines fluidgefüllten, elastisch verformbaren Sensorkörpers, in dem ein den Fluiddruck messender Drucksensor angeordnet ist, in die Dämpfungsschicht.

Gemäß einer bevorzugten Verfahrensweise umfasst die Herstellung der Dämpfungsschicht das Anordnen eines Platzhalters für den Sensorkörper in einer Form, das Ausschäumen der Form mit einem aufschäumenden Material und das Entnehmen des Platzhalters nach Verfestigung des aufschäumenden Materials, wobei der Sensorkörper nach der Entnahme des Platzhalters in den dadurch gebildeten Hohlraum eingelegt wird.

Gemäß einer weiteren bevorzugten Verfahrensweise umfasst die Herstellung der Dämpfungsschicht das Anordnen des Sensorkörpers in einer Form und das Ausschäumen der Form mit einem aufschäumenden Material, wodurch der Sensorkörper in die Dämpfungsschicht eingebettet wird.

Gemäß einer weiteren bevorzugten Verfahrensweise weist der Sensorkörper eine elastische Stützstruktur auf, in welcher der den Fluiddruck messende Drucksensor angeordnet ist, wobei die Herstellung der Dämpfungsschicht das Anordnen der Stützstruktur in einer Form und das Ausschäumen der Form mit einem aufschäumenden Material umfasst, wobei das aufschäumende Material beim Aushärten an der Grenzfläche zur Stützstruktur eine geschlossene Haut um die Stützstruktur herum bildet, welche eine luftdichte Hülle des Sensorkörpers um die Stützstruktur ausgebildet.

Die Erfindung wird nachfolgend anhand von in der Zeichnung schematisch dargestellten Ausführungsbeispielen näher erläutert. In dieser zeigen Fig. 1 einen Boxhandschuh in einer Seitenansicht, Fig. 2 einen mit der erfindungsgemäßen Vorrichtung ausgestatteten Schaumstoffkern im Inneren des Boxhandschuhs im Querschnitt, Fig. 3 eine abgewandelte Ausführung des Schaumstoffkerns und Fig. 4 eine weitere abgewandelte Ausführung des Schaumstoffkerns.

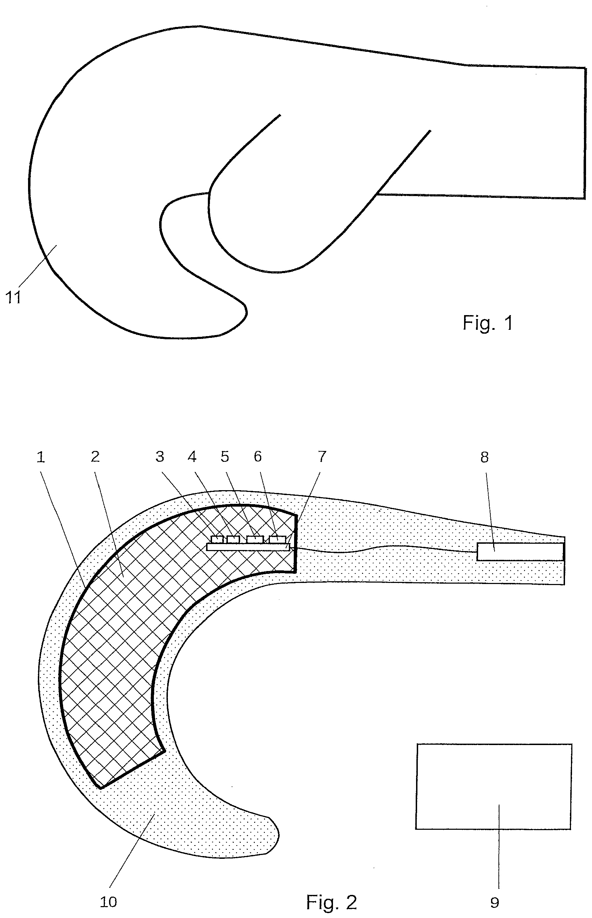

Fig. 1 zeigt einen Boxhandschuh 11, der einen Bereich für die Aufnahme des Daumens und einen weiteren Bereich für die Aufnahme der übrigen Finger der Hand eines Boxers aufweist. Wie dies bei Boxhandschuhen üblich ist, umfasst dieser einen Schaumstoffkern 10, welcher die Hand des Boxers vor Verletzungen schützen soll.

Wie in Fig. 2 ersichtlich ist, ist der Schaumstoffkern 10 mit einer Vorrichtung zur Erfassung der Schlagqualität versehen, umfassend einen Kraftsensor und einen Beschleunigungssensor, die im Inneren des Schaumstoffkerns 10 eingebettet sind. Der Kraftsensor umfasst einen verformbaren Sensorkörper 1, der eine luftdichte, mit einem Fluid, insbesondere einem Gas, vorzugsweise Luft, gefüllte Hülle und eine die von der Hülle umschlossenen Kammer ausfüllende elastische Stützstruktur 2 aufweist. Auf einer im Inneren des Sensorkörpers 1 angeordneten Elektronikplatine 7 sind ein (Luft-)drucksensor 3, der Beschleunigungssensor 4, ein Mikrokontroller 5 und eine drahtlose Übertragungseinheit 6 angeordnet, wobei die Elektronikplatine 7 sich vollständig im Inneren des Sensorkörpers 1 befindet und über ein Kabel mit einer Batterie 8 verbunden ist. Die Batterie 8 ist etwas entfernt von der Schlagfläche, etwa im Bereich der Manschette des Handschuhs, angebracht. Mit 9 ist eine Empfangs- und Auswerteeinheit bezeichnet. Wie der Abbildung zu entnehmen ist, ist die Form des Sensorkörpers 1 an die Form des Schaumstoffkerns 10 angepasst, sodass sich vor und hinter dem Sensorkissen (wobei vorne und hinten im Sinne der Schlagrichtung zu verstehen sind) eine konstant dicke Schicht des dämpfenden Materials des Schaumstoffkerns 10 ergibt. Dies ist wichtig, um vergleichbare Ergebnisse zu bekommen, unabhängig davon mit welcher Fläche des Boxhandschuhs getroffen wird.

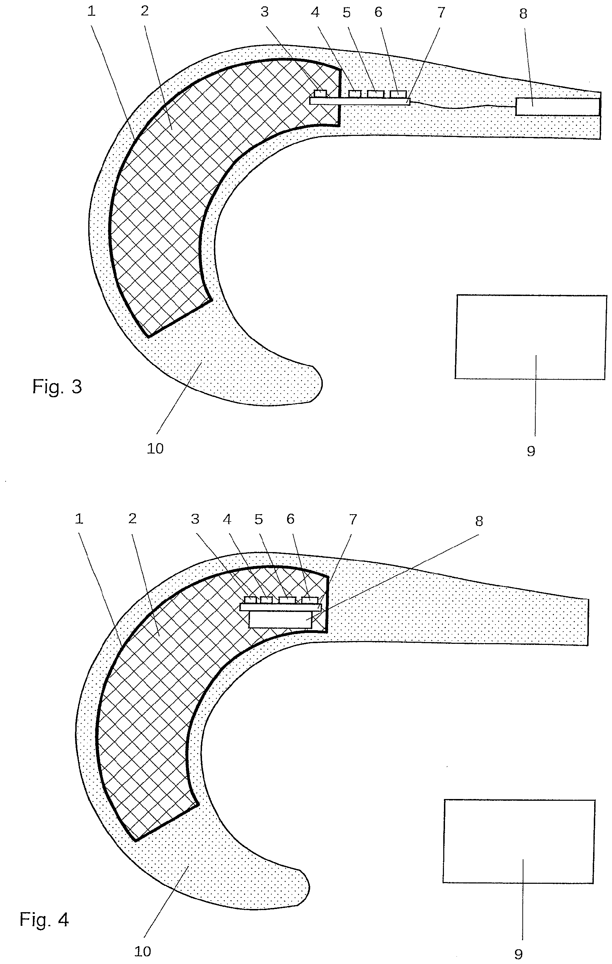

Fig. 3 zeigt eine Variante der Erfindung, bei der nicht die gesamte Elektronikplatine 7 im Inneren des Sensorkörpers 1 untergebracht ist, sondern nur ein Teil der Platine in den Sensorkörper ragt, insbesondere der Teil, auf dem sich der Drucksensor 3 befindet. Alle anderen Elemente der Fig. 3 sind analog aufgebaut wie in Fig. 2.

Fig. 4 zeigt eine Variante der Erfindung, bei der sich die Batterie 8 ebenfalls im Inneren des Sensorkörpers 1 befindet. Alle anderen Elemente der Fig. 4 sind analog aufgebaut wie in Fig. 2

In den Fig. 1 - 4 ist exemplarisch die Verwendung der Erfindung in einem Boxhandschuh gezeigt. Die Verwendung in einem Schlagpolster, einer Schutzweste, einem Fußschützer oder ähnlichen Trainingsutensilien erfolgt analog.

Der in den Fig. 1-4 dargestellte Boxhandschuh kann mit Hilfe des erfindungsgemäßen Verfahrens auf folgende Art und Weise hergestellt werden. Gemäß einer ersten Variante des Verfahrens wird beim Schäumen des Schaumstoffkerns 10 ein Platzhalter derselben Form wie der Sensorkörper 1 zunächst mit eingeschäumt und nach Aushärten des Schaumes entfernt. Der komplette Sensorkörper 1 samt Stützstruktur 2 und Elektronikplatine 7 wird dann (durch einen Schlitz o.ä.) in den freigebliebenen Hohlraum im Schaumstoffkern 10 geschoben.

Gemäß einer zweiten Variante des Verfahrens wird ein kompletter Sensorkörper 1 samt Stützstruktur 2 und Elektronikplatine 7 beim Schäumen des Schaumstoffkerns 10 gleich mit eingeschäumt. Dies garantiert einen besonders passgenauen Sitz des Sensorkörpers 1 im Schaumstoffkern 10.

Gemäß einer dritten Variante des Verfahrens wird nur die Stützstruktur 2 mitsamt der Elektronikplatine 7 beim Schäumen des Schaumstoffkerns 10 mit eingeschäumt, wobei der Schaum des Schaumstoffkerns 10 beim Aushärten eine geschlossene Haut bildet, wodurch die luftdichte Hülle des Sensorkörpers 1 um die Stützstruktur 2 gebildet wird. Dies garantiert durch die innige Verbindung einen passgenauen und besonders festen Sitz des Sensorkörpers 1 im Schaumstoffkern 10.

## Patentansprüche

1. Vorrichtung zur Erfassung der Schlagqualität bei Kontaktsportarten umfassend wenigstens einen Sensor (1) für die Erfassung einer auf ein Trainingsgerät (11) einwirkenden Kraft und wenigstens einen :Sensor (4) für die Erfassung einer Beschleunigung des Trainingsgeräts (11), wobei der Kraftsensor einen fluidgefüllten, elastisch verformbaren Sensorkörper (1) umfasst, in dem ein den Fluiddruck messender Drucksensor (3) angeordnet ist, wobei Messwerte des Kraftsensors (1) und des Beschleunigungssensors (4) einer Erfassungseinheit zugeführt sind, die zur Aufzeichnung einer Zeitreihe der Messwerte des Kraftsensors (1) und des Beschleunigungssensors (4) ausgebildet ist, **dadurch gekennzeichnet, dass** die Erfassungseinheit ausgebildet ist, um die Zeitreihe der Messwerte des Beschleunigungssensors zur Ermittlung einer Bewegungsbahn auszuwerten, die mit vordefinierten Bewegungsbahnen abgeglichen wird, um eine Schlagart zu ermitteln, und dass die Erfassungseinheit weiters ausgebildet ist, um die Messwerte des Kraftsensors mit Hilfe von Kalibrierungsdaten zu korrigieren, die der entsprechenden Schlagart zugeordnet sind.

2. Vorrichtung nach Anspruch 1, **dadurch gekennzeichnet, dass** der Sensorkörper (1) eine gasgefüllte Kammer umfasst, die von einer flexiblen, durch Schlageinwirkung verformbaren Hülle umgeben ist und eine elastische Stützstruktur (2) enthält, wobei die Stützstruktur (2) ein Dämpfungselement ausbildet, welches die bei einer Schlageinwirkung auftretenden Kräfte mechanisch dämpft.

3. Vorrichtung nach Anspruch 2, **dadurch gekennzeichnet, dass** die elastische Stützstruktur (2) den Drucksensor (3) zumindest teilweise umgibt.

4. Vorrichtung nach einem der Ansprüche 1 bis 3, **dadurch gekennzeichnet, dass** der Beschleunigungssensor (4), die Erfassungseinheit und/oder ein Stromspeicher (8) im Inneren des Sensorkörpers (1) angeordnet ist.

5. Vorrichtung nach einem der Ansprüche 1 bis 4, **dadurch gekennzeichnet, dass** die Vorrichtung weiters das Trainingsgerät (11) umfasst und der Kraftsensor (1) und ggf. der Beschleunigungssensor (4) in das Trainingsgerät (11) integriert, insbesondere eingebettet sind.

6. Vorrichtung nach Anspruch 5, **dadurch gekennzeichnet, dass** der Kraftsensor (1) und der Beschleunigungssensor (4) in einen Boxhandschuh (11), einen Schlagpolster, eine Schutzweste,einen Fußschützer oder einen Kopfschutz als Trainingsgerät eingebettet, insbesondere eingenäht, sind.

7. Vorrichtung nach einem der Ansprüche 1 bis 6, **dadurch gekennzeichnet, dass** der Kraftsensor (1) und der Beschleunigungssensor (4) von einer Dämpfungsschicht (10), insbesondere einer Schicht eines Kunststoffschaums, umgeben sind.

8. Vorrichtung nach einem der Ansprüche 1 bis 7, **dadurch gekennzeichnet, dass** der Sensorkörper (1) des Kraftsensors im Schlagbereich des Trainingsgeräts, insbesondere Boxhandschuhs (11), derart in das Trainingsgerät eingebettet ist, dass der Sensorkörper (1) auf einer schlagzugewandten Seite von einer Dämpfungsschicht (10) konstanter Dicke bedeckt ist, wobei der Sensorkörper (1) bevorzugt auch auf einer schlagabgewandten Seite von einer Dämpfungsschicht (10) konstanter Dicke bedeckt ist.

9. Vorrichtung nach Anspruch 8, **dadurch gekennzeichnet, dass** der Sensorkörper mit der Dämpfungsschicht (10) stoffschlüssig verbunden ist.

10. Verfahren zur Herstellung einer Vorrichtung nach einem der Ansprüche 7 bis 9, umfassend das Herstellen der Dämpfungsschicht (10) eines Trainingsgeräts aus einem geschäumten Material, insbesondere Kunststoffschaum, und das Einbetten des fluidgefüllten, elastisch verformbaren Sensorkörpers (1), in dem der den Fluiddruck messende Drucksensor (3) angeordnet ist, in die Dämpfungsschicht (10).

11. Verfahren nach Anspruch 10, **dadurch gekennzeichnet, dass** die Herstellung der Dämpfungsschicht (10) das Anordnen eines Platzhalters für den Sensorkörper (1) in einer Form, das Ausschäumen der Form mit einem aufschäumenden Material und das Entnehmen des Platzhalters nach Verfestigung des aufschäumenden Materials umfasst, und dass der Sensorkörper (1) nach der Entnahme des Platzhalters in den dadurch gebildeten Hohlraum eingelegt wird.

12. Verfahren nach Anspruch 10, **dadurch gekennzeichnet, dass** die Herstellung der Dämpfungsschicht (10) das Anordnen des Sensorkörpers (1) in einer Form und das Ausschäumen der Form mit einem aufschäumenden Material umfasst, wodurch der Sensorkörper (1) in die Dämpfungsschicht (10) eingebettet wird.

13. Verfahren nach Anspruch 11 oder 12, **dadurch gekennzeichnet, dass** der Sensorkörper (1) eine elastische Stützstruktur (2) aufweist, in welcher der den Fluiddruck messende Drucksensor (3) angeordnet ist, wobei die Herstellung der Dämpfungsschicht (10) das Anordnen der Stützstruktur (2) in einer Form und das Ausschäumen der Form mit einem aufschäumenden Material umfasst, wobei das aufschäumende:Material beim Aushärten an der Grenzfläche zur Stützstruktur (2) eine geschlossene Haut um die Stützstruktur (2) herum bildet, welche eine luftdichte Hülle des Sensorkörpers (1) um die Stützstruktur (2) ausgebildet.

## Claims

1. A device for detecting the impact quality in contact sports comprising at least one sensor (1) for detecting a force acting on a training device (11) and at least one sensor (4) for detecting an acceleration of the training device (11), wherein the force sensor comprises a fluid-filled, elastically deformable sensor body (1), in which a pressure sensor (3) is arranged for measuring the fluid pressure, wherein measured values of the force sensor (1) and of the acceleration sensor (4) are fed to a detection unit which is designed to record a time series of the measured values of the force sensor (1) and the acceleration sensor (4), **characterized in that** the detection unit is designed to evaluate the time series of the measured values of the acceleration sensor, in order to determine a trajectory, which is compared with predefined trajectories in order to determine an impact type, and that the detection unit is further designed to correct the measured values of the force sensor by using calibration data which are assigned to a corresponding impact type.

2. Device according to claim 1, **characterized in that** the sensor body (1) comprises a gas-filled chamber which is surrounded by a flexible shell deformable by impact and which contains an elastic support structure (2), the support structure (2) forming a damping element which mechanically dampens the forces that occur during impact.

3. Device according to claim 2, **characterized in that** the elastic support structure (2) at least partially surrounds the pressure sensor (3).

4. Device according to any one of claims 1 to 3, **characterized in that** the acceleration sensor (4), the detection unit and/or a power storage (8) is arranged inside the sensor body (1).

5. Device according to any one of claims 1 to 4, **characterized in that** the device further comprises the training device (11) and wherein the force sensor (1) and possibly the acceleration sensor (4) are integrated, in particular embedded, in the training device (11).

6. Device according to claim 5, **characterized in that** the force sensor (1) and the acceleration sensor (4) are embedded, in particular sewn into, a boxing glove (11), a punch pad, a protective vest, a foot protector or a head protector as a training device.

7. Device according to any one of claims 1 to 6, **characterized in that** the force sensor (1) and the acceleration sensor (4) are surrounded by a damping layer (10), in particular a layer of plastic foam.

8. Device according to any one of claims 1 to 7, **characterized in that** the sensor body (1) of the force sensor in an impact area of the training device, in particular boxing glove (11), is embedded in the training device such that the sensor body (1) on a side facing the impact is covered by a damping layer (10) of constant thickness, the sensor body (1) preferably also being covered on a side facing away from the impact by a damping layer (10) of constant thickness.

9. Device according to claim 8, **characterized in that** the sensor body is connected to the damping layer (10) in a materially bonded manner.

10. A method for producing a device according to any one of claims 7 to 9, comprising producing the damping layer (10) of a training device from a foamed material, in particular plastic foam, and embedding the fluid-filled, elastically deformable sensor body (1) in which the pressure sensor (3) measuring the fluid pressure is arranged in the damping layer (10).

11. Method according to claim 10, **characterized in that** the step of producing the damping layer (10) comprises arranging a placeholder for the sensor body (1) in a mold, foaming the mold with a foaming material and removing the placeholder after the foaming material has solidified, and that the sensor body (1) after removal of the placeholder is inserted into the cavity thus formed.

12. Method according to claim 10, **characterized in that** producing the damping layer (10) comprises arranging the sensor body (1) in a mold and foaming the mold with a foaming material, thereby embedding the sensor body (1) in the damping layer (10).

13. Method according to claim 11 or 12, **characterized in that** the sensor body (1) has an elastic support structure (2) in which the pressure sensor (3) measuring the fluid pressure is arranged, wherein producing the damping layer (10) comprises the arrangement of the support structure (2) in a mold and the foaming of the mold with a foaming material, wherein the foaming material upon hardening forms a closed skin around the support structure (2) at the interface with the support structure (2), which forms an airtight shell of the sensor body (1) around the support structure (2).

## Revendications

1. Dispositif de détection de la qualité d'impact dans les sports de contact, comprenant au moins un capteur (1) pour détecter une force agissant sur un dispositif d'entraînement (11) et au moins un capteur (4) pour détecter une accélération du dispositif d'entraînement (11), le capteur de force ayant un corps de capteur (1) rempli de fluide et élastiquement déformable, dans lequel est disposé un capteur de pression (3) mesurant la pression du fluide, dans lequel des valeurs mesurées du capteur de force (1) et du capteur d'accélération (4) sont amenés à une unité d'enregistrement qui est conçue pour enregistrer une série temporelle des valeurs mesurées du capteur de force (1) et du capteur d'accélération (4), **caractérisé en ce que** l'unité d'enregistrement est conçue pour évaluer la série temporelle des valeurs mesurées du capteur d'accélération pour déterminer une trajectoire, qui est comparée à des trajectoires prédéfinies afin de déterminer un type d'impact, et **en ce que** l'unité d'enregistrement est en outre conçue pour corriger les valeurs mesurées du capteur de force à l'aide des données d'étalonnage associées au type d'impact correspondant.

2. Dispositif selon la revendication 1, **caractérisé en ce que** le corps de capteur (1) comprend une chambre remplie de gaz qui est entourée d'une coque souple déformable par impact et qui comprend une structure de support élastique (2), la structure de support (2) formant un élément amortisseur qui amortit mécaniquement les forces se produisant à la suite d'un impact.

3. Dispositif selon la revendication 2, **caractérisé en ce que** la structure de support élastique (2) entoure au moins partiellement le capteur de pression (3).

4. Dispositif selon l'une des revendications 1 à 3, **caractérisé en ce que** le capteur d'accélération (4), l'unité d'enregistrement et/ou une unité de stockage d'énergie (8) sont disposés à l'intérieur du corps de capteur (1).

5. Dispositif selon l'une des revendications 1 à 4, **caractérisé en ce que** le dispositif comprend en outre le dispositif d'entraînement (11), le capteur de force (1) et éventuellement le capteur d'accélération (4) étant intégrés, notamment encastrés, dans le dispositif d'entraînement (11).

6. Dispositif selon la revendication 5, **caractérisé en ce que** le capteur de force (1) et le capteur d'accélération (4) sont intégrés, notamment cousus, dans un gant de boxe (11), un coussin de frappe, un gilet de protection, un protecteur de pied ou un protecteur de tête comme dispositif d'entraînement.

7. Dispositif selon l'une des revendications 1 à 6, **caractérisé en ce que** le capteur de force (1) et le capteur d'accélération (4) sont entourés d'une couche d'amortissement (10), notamment d'une couche de mousse plastique.

8. Dispositif selon l'une des revendications 1 à 7, **caractérisé en ce que** le corps de capteur (1) du capteur de force dans la zone d'impact du dispositif d'entraînement, notamment du gant de boxe (11), est encastré dans le dispositif d'entraînement de telle manière que le corps de capteur (1) est recouvert d'une couche d'amortissement (10) d'épaisseur constante sur une face tournée vers l'impact, le corps de capteur (1) étant de préférence également recouvert d'une couche d'amortissement (10) d'épaisseur constante sur une face tournée à l'opposé de l'impact.

9. Dispositif selon la revendication 8, **caractérisé en ce que** le corps de capteur est relié matériellement à la couche d'amortissement (10).

10. Procédé de fabrication d'un dispositif selon l'une des revendications 7 à 9, comprenant la fabrication de la couche d'amortissement (10) d'un dispositif d'entraînement à partir d'un matériau expansé, en particulier de mousse plastique, et l'encastrement du corps de capteur (1) rempli de fluide et élastiquement déformable, dans lequel est disposé le capteur de pression (3) mesurant la pression du fluide, dans la couche d'amortissement (10).

11. Procédé selon la revendication 10, **caractérisé en ce que** la fabrication de la couche d'amortissement (10) comprend l'application d'un support provisoire pour le corps de capteur (1) dans un moule, le garnissage de mousse du moule avec un matériau moussant et le retrait du support provisoire après la solidification du matériau moussant, et **en ce que** le corps de capteur (1) est inséré dans la cavité formée par le support provisoire après le retrait de celui-ci.

12. Procédé selon la revendication 10, **caractérisé en ce que** la fabrication de la couche d'amortissement (10) comprend l'application du corps de capteur (1) dans un moule et le garnissage de mousse du moule avec un matériau moussant, à la suite duquel le corps de capteur (1) est encastré dans la couche d'amortissement (10).

13. Procédé selon la revendication 11 ou 12, **caractérisé en ce que** le corps de capteur (1) présente une structure de support élastique (2), dans laquelle est disposé le capteur de pression (3) mesurant la pression du fluide, la fabrication de la couche d'amortissement (10) comprenant l'application de la structure de support (2) dans un moule et le garnissage de mousse du moule avec un matériau moussant, dans lequel le matériau moussant forme une peau fermée autour de la structure de support (2) lorsqu'il durcit à l'interface avec la structure de support (2), laquelle peau forme une enveloppe étanche du corps de capteur (1) autour de la structure de support (2).
